# EUROPEAN PATENT SPECIFICATION

(11) **EP 0 959 543 B1**
(45) Date of publication and mention of the grant of the patent: **20.06.2001**
(21) Application number: 98830185.9
(22) Date of filing: 27.03.1998
(51) Int. Cl.: H02B 1/00, H02B 1/46

(54) **A box for electric material with means for fixing a cover and for fixing the box to a wall**
Gehäuse für elektrische Installation mit Befestigungsvorrichtung für den Deckel und Wandbefestigung
Boîtier pour matériel électrique avec fixations pour couvercle et fixations sur support

(43) Date of publication of application: 24.11.1999
(73) Proprietor: Bertoldo & C. Srl, 10078 Venaria Reale (Torino) (IT)
(72) Inventor: Bertoldo, Piero, 10070 Balangero, Torino (IT)
(74) Representative: Marchitelli, Mauro

(56) References cited:
- DE-A- 3 612 975
- DE-A- 19 540 111

## Description

The present invention relates to a box for electric material according to the preamble of claim 1, which is known from either DE-A-3612975 or DE-A-19540111.

Boxes intended to be used in domestic or industrial electric installations as pull boxes or as housings for electric or electronic apparatus normally comprise a box-shaped base defining an internal volume and an aperture which is intended to be closed by a removable cover.

DE-A-3612975 and DE-A-19540111 disclose boxes for electric material in which the internal volume is insulated in a liquid-tight manner from the external environment. The seats for fixing the cover and the seats for the screws for fixing the box to a wall are aligned to each other and one of such seats is integrally formed with the base whereas the other seat is provided on a separated element fixed to the base.

A common problem of both prior art solutions is that the user has considerable difficulties in reaching with a screwdriver the heads of the screws used for fixing the base to a wall because such screws are located at the end of a deep hole.

The object of the present invention is to provide an improved solution which is not affected by the above drawback.

According to the present invention, this object is achieved by a box having the features forming the subject of the main claim.

Characteristics and advantages of the box according to the invention will become evident in the course of the detailed description which follows, given purely by way of non-limiting example, with reference to the annexed drawings, in which:
- figure **1** is a perspective view of a first embodiment of the box according to the invention,
- figures **2** and **3** are front cross-sections which show the seats for the cover and the seats for the screws for fixing the box,
- figure **4** is a perspective view analogous to figure 1, showing the box provided with the fixing screws,
- figure **5** is a back perspective view of a second embodiment of a box according to the invention,
- figure **6** is a front cross-section of the box of figure 5,
- figure **7** is a perspective view in greater scale of a component of the box of figure 5,
- figure **8** is a perspective view analogous to figure 5, showing the box with the fixing screws, and
- figure **9** is a front cross-section showing the box with the fixing screws.

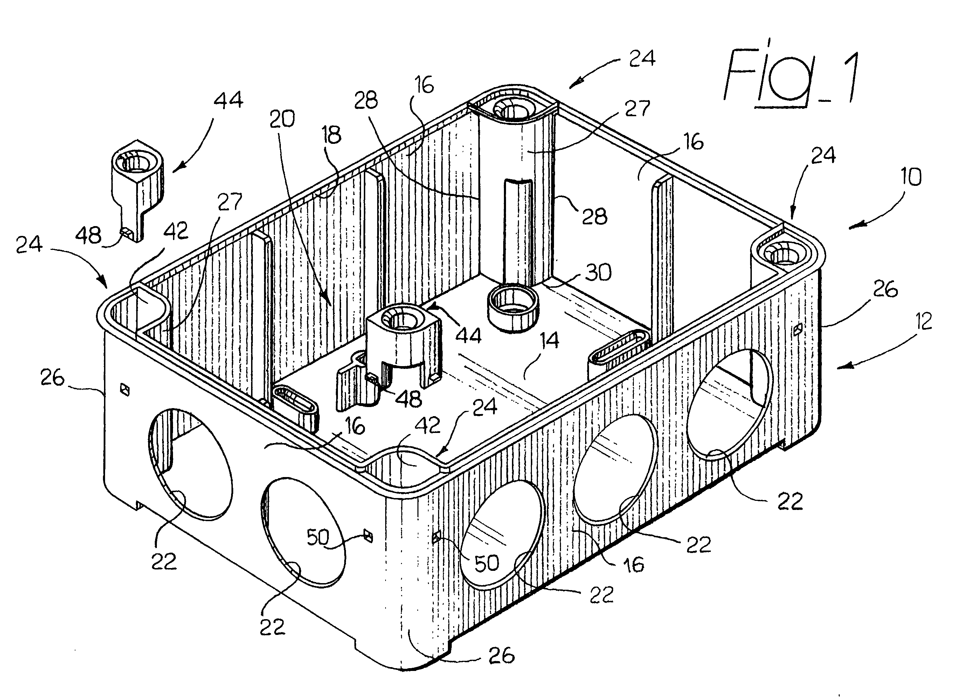

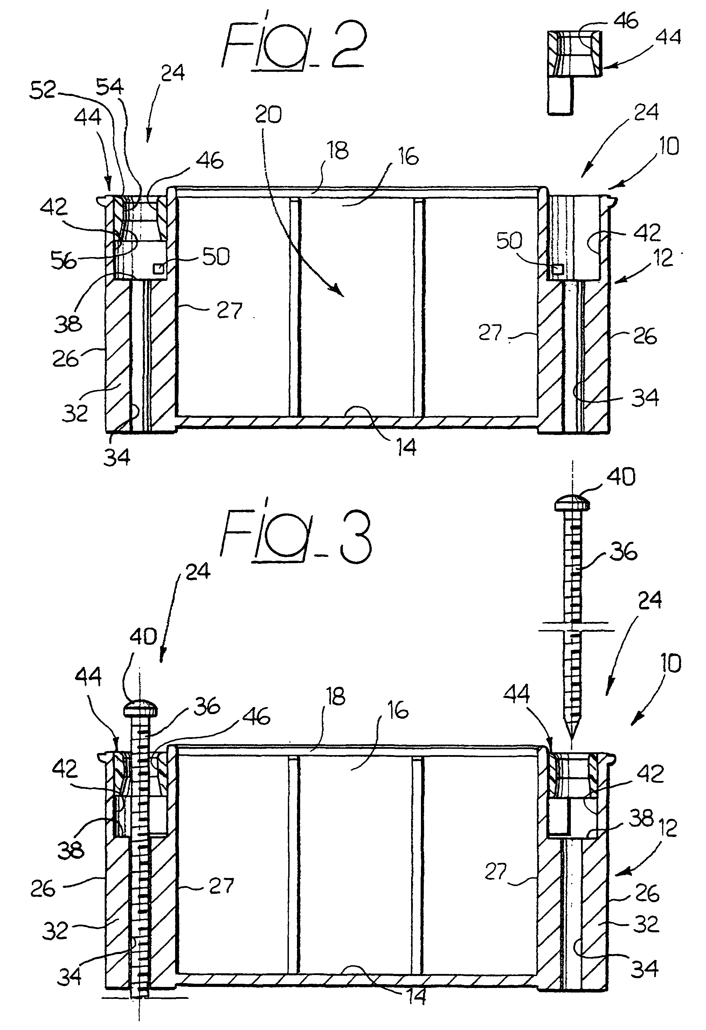

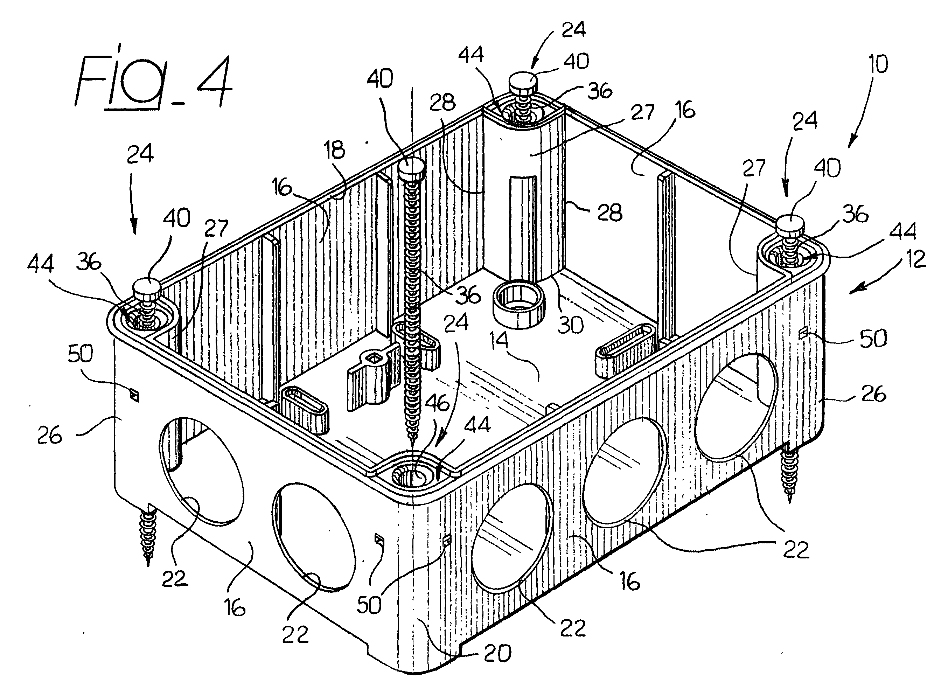

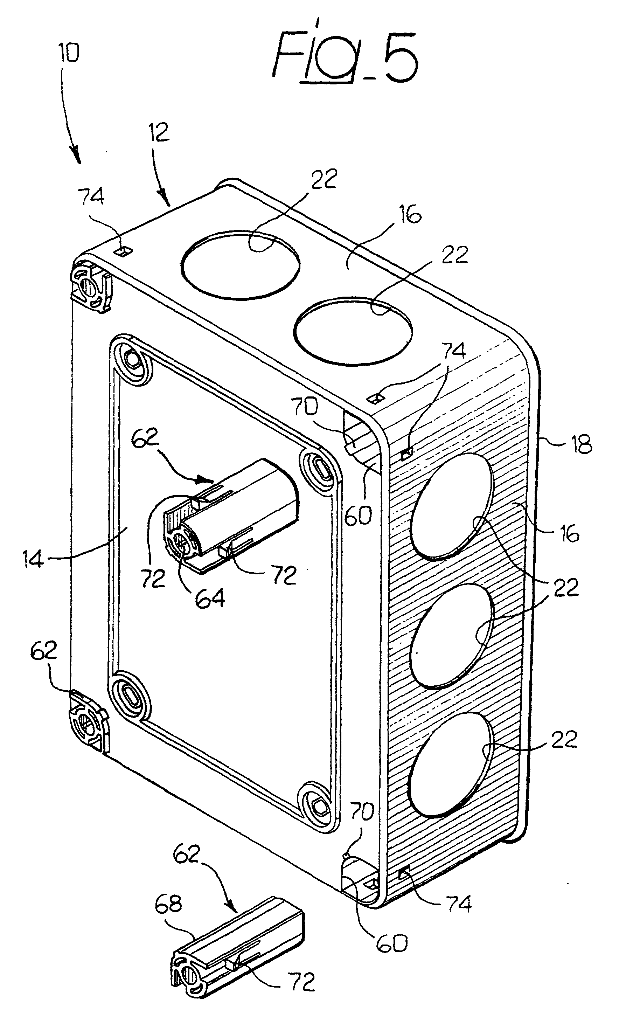

With reference to figures 1 to 4, 10 indicates a box for electric material, comprising a box-shaped base 12 made of injection moulded plastic material. The base 12 has a bottom wall 14 and four lateral walls 16 which define an upper aperture 18 and an internal volume 20. The lateral walls 16 have circular non-through notches forming lines of preferential breaking which facilitates the formation of through apertures 22 adapted to receive couplings for protection elements for electric installations. The walls 16 could also be deprived of such lines of preferential breaking and in this case the apertures 22 could be obtained by means of drilling tools of known type. Preferably, the apertures 22 are intended to receive liquid-tight couplings for example of the type disclosed in a contemporary patent application of the same Applicant titled "A liquid-tight coupling for boxes for electric material".

The base 12 has four fixing sections 24 arranged at the intersection between each pair of adjacent lateral walls 16. Each fixing section 24 has an external wall 26, for example with arcuate shape, which connects to each other two lateral walls 16. On the internal side of the base 12, each fixing section 24 is delimited by a wall 27 formed integrally with the base 12. Each wall 27 is joined to the lateral walls 16 along lines 28 and to the bottom wall 14 along a line 30. In this way, the elements contained within the fixing sections 24 are insulated from the internal volume 20 of the base 12. In the following description and in the claims, by stating that an element is insulated from the internal volume 20 it is meant that such element is not in fluid contact with any part of the volume 20 in the condition in which the upper aperture 18 of the base 12 is closed by a suitable cover.

The terminology, "insulated from the internal volume" furthermore refers to an insulation of electric type. In fact, the solution according to the invention has the object to obtain, in addition to liquid-tightness, an electric insulation of class II and to reduce the unused space.

Each fixing section 24 contains a first seat adapted to receive means for fixing to the base 12 a removable cover (not shown) adapted to close the aperture 18 and a second seat adapted to receive means for fixing the base 12 to a support wall.

With reference to figures 2 and 3, in a first embodiment of the invention each fixing section 24 has a monolithic block 32 integrally formed with the base 12. The block 32 has a smooth through hole 34 through which can extend a screw 36 intended for example to engage a screw-anchor inserted in the support wall. The block 32 has an upper abutment surface 38 against which is intended to abut the head 40 of the screw 36. Each fixing section 24 above the block 32 has an upwardly open cavity 42 in which is inserted and fixed a separated element 44 in which is formed a seat 46 for the engagement of the means for fixing the cover. The seat 46 is arranged substantially coaxially with the through hole 34 forming the seat for the screw 36. The coaxial arrangement of the two seats 46, 34 permits to reduce the dimension of the fixing sections 24 and therefore, remaining the same the overall dimensions of the box, to increase the internal volume 20 available for housing electric wires or electric or electronic material. The seat 46 for the means for fixing the cover must be formed on a separated component because the shown structure could not be produced in a single injection moulding operation. In the example shown in the figures, the fixing of the separated element 44 is obtained by snap engagement of a pair of teeth 48 (figure 1) into small apertures 50 formed in the outer wall 26 of each fixing section 24. In alternative, the separated element 44 could be fixed in the fixing section 24 in any other way, for example by gluing or welding.

In the embodiment shown in the figures by way of example, the seat 46 for the means for fixing the cover is formed as disclosed in a contemporary European patent application of the same Applicant titled "A box for electric material with a removable cover". The through hole 46 has a bevelled section 52, a cylindrical portion 54 and a frusto-conical portion 56. The minimum diameter of the through hole 46 is greater than the maximum diameter of the head 40, so as to permit the passage of the head 40 without interference. The seat 46 could however be formed in a different way. For example, this seat could be formed by a threaded hole for the engagement by a screw for fixing the cover (not shown).

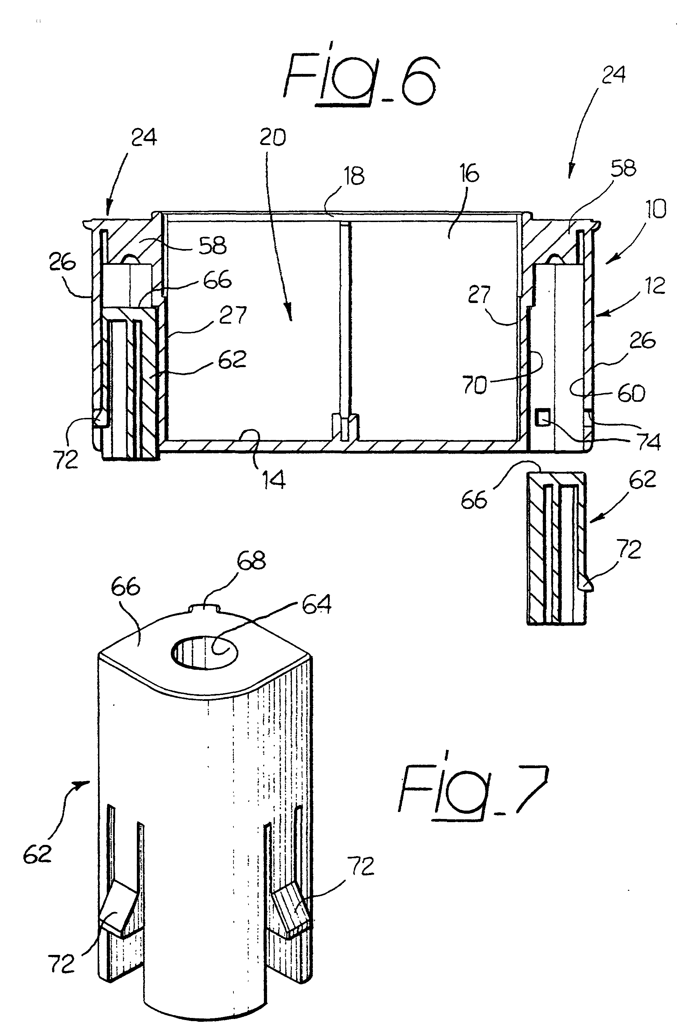

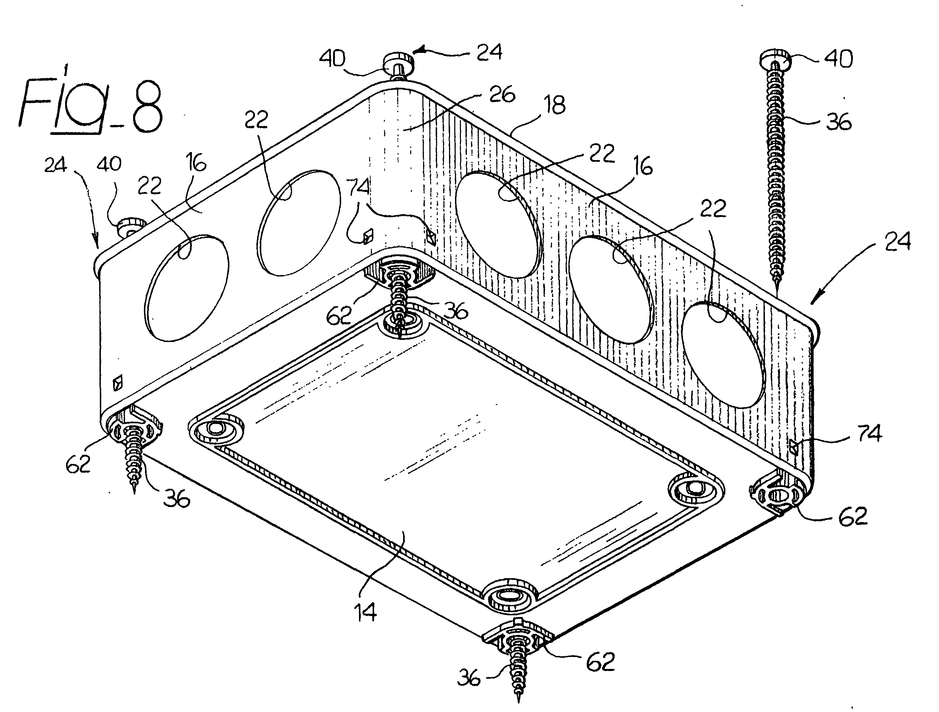

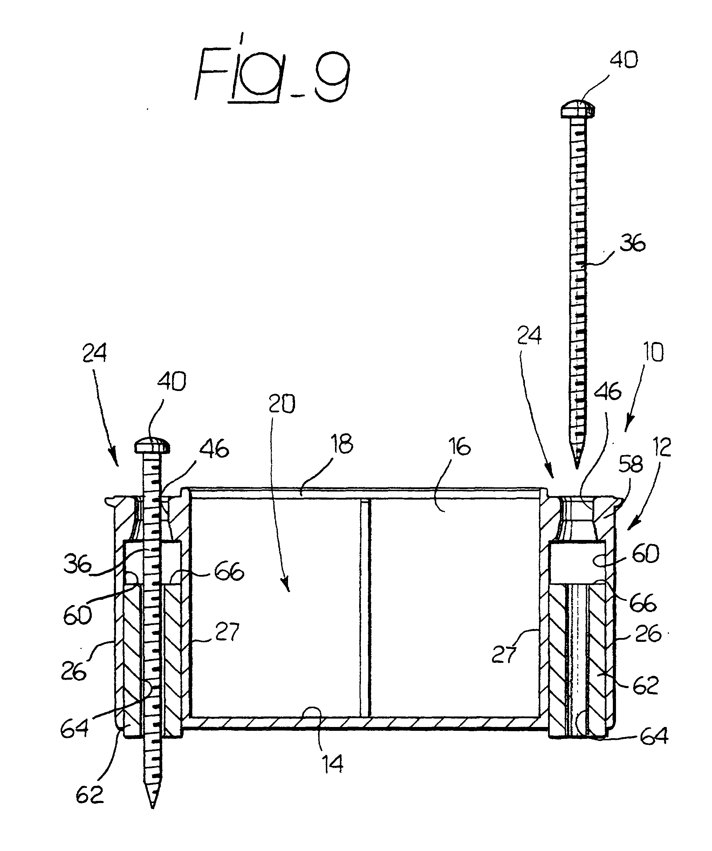

With reference to figures 5 to 9 will now be disclosed a second embodiment of the present invention. The element corresponding to those previously described are indicated by the same numeral references. In this second embodiment, the seat 46 for the means for fixing the cover is formed in a portion 58 integral with the base 12. Below the integral portion 58 is formed a downwardly open cavity 60 in which is inserted and fixed a separated element 62 having a through hole 64 through which extends the screw 36. The separated element 62 has an upper abutment surface 66 against which is intended to abut the head 40 of the screw 36. Also in this case, the two holes 64 and 46 are substantially aligned to each other and are insulated from the internal volume 20 of the base 12. In the shown example, the separated element 62 has a longitudinal positioning rib 68 which engages a corresponding groove 70 formed in the cavity 60. The fixing of the separated element 62 can be obtained by snap engagement of a pair of teeth 72 into small apertures 74 formed in the upper wall 26. In alternative, the separated element 62 could be fixed into the cavity 60 by any other system, as for example gluing, welding or the like. With reference in particular to figure 9, the lower end of the separated element 62 slightly projects beyond the outer surface of the bottom wall 14. In this way, the tightening force of the screw 40 pushes directly the separated element 62 against the support wall (not shown) and does not tend to provoke a detachment of the separated element 62 from the base 12.

## Claims

1. A box for electric material, comprising:
- a box-shaped base (12) defining an aperture (18) and an internal volume (20),
- at least one first seat (46) adapted to receive means for fixing to the base (12) a removable cover adapted to close said aperture (18), and
- at least one second seat (34, 64) adapted to receive a screw (36) for fixing the base (12) to a support wall, the second seat (34, 64) including a through hole (34, 64) and an abutment surface (38, 66) for the head (40) of said screw (36),
wherein the first and the second seat (46, 34, 64) are substantially aligned to each other and are arranged in a section (24) of the base (12) which is insulated by said internal volume (20), one of said seats (46, 34, 64) being integrally formed with the base (12) and the other seat being provided on a separated element (44, 62) fixed to the base (12),
**characterised in that** said abutment surface (38, 66) is located in close proximity of said first seat (46).

2. A box according to claim 1, characterized in that said section (24) has a monolithic block (32) provided with a through hole (34) adapted to receive a screw (36) for fixing the base (12) to a support wall, a separated element (44) having a seat (46) adapted to receive said means for fixing the cover being inserted and fixed in a cavity (42) of said section (24).

3. A box according to claim 1, characterized in that said section (24) comprises an integral portion (58) provided with said seat (46) adapted to receive the means for fixing the cover and in that said section (24) has a cavity in which is inserted and fixed a separated element (62) having a through hole (64) adapted to receive a screw (36) for fixing the base (12) to a support wall.

4. A box according to claim 2 or 3, characterized in that said separated element (44, 62) is provided with teeth (48, 72) which snap engage respective apertures (50, 74) formed on the outer wall (26) of said section (24).

## Patentansprüche

1. Gehäuse für elektrische Installation, umfassend:
- ein kastenförmiges Basisteil (12), das einen Ausschnitt (18) und ein Innenvolumen (20) begrenzt,
- zumindest einen ersten Sitz (46), der geeignet ist, Mittel zur Befestigung eines zum Verschließen des Ausschnitts (18) geeigneten abnehmbaren Deckels an dem Basisteil (12) aufzunehmen, und
- zumindest einen zweiten Sitz (34, 64), der geeignet ist, eine Schraube (36) zum Befestigen des Basisteils (12) an einer Trägerwand aufzunehmen, wobei der zweite Sitz (34, 64) eine Durchgangsöffnung (34, 64) und eine Auflagerfläche (38, 66) für den Kopf (40) der Schraube (36) aufweist,
wobei der erste und der zweite Sitz (46, 34, 64) im wesentlichen zueinander ausgerichtet und in einem Segment (24) des Basisteils (12) angeordnet sind, das von dem Innenvolumen (20) isoliert ist, wobei einer der Sitze (46, 34, 64) einstückig mit dem Basisteil (12) ausgebildet ist und der andere Sitz auf einem gesonderten Element (44, 62) vorgesehen ist, das an dem Basisteil (12) befestigt ist,
dadurch gekennzeichnet, daß
die Auflagerfläche (38, 66) in unmittelbarer Nähe des ersten Sitzes (46) angeordnet ist.

2. Gehäuse nach Anspruch 1, dadurch gekennzeichnet, daß das Segment (24) einen Monolithblock (32) aufweist, der mit einer Durchgangsöffnung (34) versehen ist, die zur Aufnahme einer Schraube (36) zur Befestigung des Basisteils (12) an einer Trägerwand geeignet ist, wobei ein gesondertes Element (44) einen Sitz (46) aufweist, der zur Aufnahme der Befestigungsvorrichtung für den Deckel geeignet ist, der in einem Formhohlraum (42) des Segments (24) eingesetzt und befestigt ist.

3. Gehäuse nach Anspruch 1, dadurch gekennzeichnet, daß das Segment (24) einen einteiligen Abschnitt (58) aufweist, der mit dem Sitz (46) versehen ist, der zur Aufnahme der Befestigungsvorrichtung für den Deckel geeignet ist, und daß das Segment (24) einen Formhohlraum aufweist, in dem ein gesondertes Element (62) eingesetzt und befestigt ist, das eine Durchgangsöffnung (64) aufweist, die zur Aufnahme einer Schraube (36) zur Befestigung des Basisteils (12) an einer Trägerwand geeignet ist.

4. Gehäuse nach Anspruch 2 oder 3, dadurch gekennzeichnet, daß das gesonderte Element (44, 62) mit Zähnen (48, 72) ausgestattet ist, die in jeweils auf der Außenwand (26) des Segments (24) ausgebildete Ausschnitte (50, 74) einrasten.

## Revendications

1. Boîte pour du matériel électrique, comportant :
- une base en forme de boîte (12) définissant une ouverture (18) et un volume interne (20),
- au moins un premier siège (46) prévu pour recevoir des moyens pour la fixation sur la base (12) d'un couvercle amovible prévu pour fermer ladite ouverture (18), et
- au moins un deuxième siège (34, 64) prévu pour recevoir une vis (36) pour la fixation de la base (12) sur un mur de support, le deuxième siège (34, 64) comprenant un trou débouchant (34, 64) et une surface de butée (38, 66) pour la tête (40) de ladite vis (36),
les premier et deuxième sièges (46, 34, 64) étant sensiblement alignés l'un avec l'autre et étant disposés dans une section (24) de la base (12) qui est isolée par ledit volume interne (20), un desdits sièges (46, 34, 64) étant formé d'un seul tenant avec la base (12) et l'autre siège étant prévu sur un élément séparé (44, 62) fixé sur la base (12),
caractérisée en ce que ladite surface de butée (38, 66) est disposée à proximité dudit premier siège (46).

2. Boîte selon la revendication 1, caractérisée en ce que ladite section (24) possède un bloc monolithique (32) pourvu d'un trou débouchant (34) prévu pour recevoir une vis (36) pour la fixation de la base (12) sur un mur de support, un élément séparé (44) ayant un siège (46) prévu pour recevoir lesdits moyens pour la fixation du couvercle qui est inséré et fixé dans une cavité (42) de ladite section (24).

3. Boîte selon la revendication 1, caractérisée en ce que ladite section (24) comporte une partie intégrale (58) pourvue dudit siège (46) prévu pour recevoir les moyens pour la fixation du couvercle et en ce que ladite section (24) possède une cavité dans laquelle est inséré et fixé un élément séparé (62) ayant un trou débouchant (64) prévu pour recevoir une vis (36) pour la fixation de la base (12) sur un mur de support.

4. Boîte selon la revendication 3, caractérisée en ce que ledit élément séparé (44, 62) est pourvu de dents (48, 72) qui engagent par encliquetage des ouvertures respectives (50, 74) formées sur la paroi externe (26) de ladite section (24).
